# EUROPEAN PATENT SPECIFICATION

(11) **EP 0 611 041 B1**
(45) Date of publication and mention of the grant of the patent: **28.04.1999**
(21) Application number: 94300378.0
(22) Date of filing: 19.01.1994
(51) Int. Cl.: C22B 11/02

(54) **Method of recovering platinum using a catchment device**
Verfahren zur Rückgewinnung von Platin unter Verwendung einer Auffangvorrichtung
Procédé pour la récupération de platine utilisant un appareil de captage

(30) Priority: 09.02.1993 GB 9302531
(43) Date of publication of application: 17.08.1994
(73) Proprietor: JOHNSON MATTHEY PUBLIC LIMITED COMPANY, London EC1N 8JP (GB)
(72) Inventor: Horner, Brian Thomas, Bourn, Cambridge, CB3 2TJ (GB); McGrath, Robert Brinley, St Neots, Cambridge, PE19 3LH (GB)
(74) Representative: Wishart, Ian Carmichael

(56) References cited:
- EP-A- 0 077 121
- EP-A- 0 364 153
- GB-A- 1 404 576
- GB-A- 2 096 484
- GB-A- 2 141 042
- US-A- 3 434 826
- US-A- 5 122 185

## Description

This invention concerns improvements in platinum recovery, more especially in the recovery of platinum used as a catalyst in ammonia oxidation.

The process of oxidation of ammonia in nitric acid plants, by passing the mixture of gases over a catalyst gauze, which is usually an alloy of platinum and 5-10% rhodium, is well established. It is also well known that platinum is lost from the catalyst during the process and may be recovered in part by a so-called catchment gauze based on palladium. The basis ofthe catchment process is described in US Patent 3,434,820 and "Platinum Metals Review" 13 [No 1] pages 2-8 (1969). The catchment gauze used in practice was originally a palladium-gold alloy, although the trend in the art appears to be towards the use of palladium itself. Palladium alloys with base metals, have been proposed and used to a greater or lesser extent. Base metals and other alloying elements which have been recommended in particular (see EP 0,077,121) are gold, of course; platinum; nickel; copper; ruthenium and silver. Cobalt has been mentioned as a potential component of catalyst gauzes (see our GB 1,404,576) and a possible component for recovery gauzes (see USP 5,122,185) but it does not appear that this material has in fact previously been used and its unique property in emission control has not been realised and used in a practical application.

The catchment gauzes in general use are woven from fine wires, although it is possible also to use agglomerated fibre or ribbon (see GB 2,141,042, GB 2,096,484 for example), and the latest developments are in knitted fabrics (see EP 0,364,153) to form gauzes.

There remains a need, despite over 20 years development of the gauzes and the catchment materials, for a catchment material that offers at least some of ease of manufacture, good recovery performance and other advantages over current materials. We have also realised that during the start-up period of an ammonia oxidation campaign, the incomplete catalytic processes tend to give higher production of N₂O than during later stages ofthe campaign. It is an aim ofthe present invention to reduce the potential for emission of N₂O particularly during start-up but potentially also throughout the campaign.

The present invention provides a method of attenuating N₂O emissions during start-up of an ammonia oxidation reaction utilising a platinum based catalyst gauze and incorporating a platinum recorevy gauze comprising fibres of a palladium alloy, characterised in that said palladium alloy contains 0.1 to 5wt% of cobalt.

It should be understood that "fibres" or "wires" as used herein include filaments or elongate elements of any cross-section, and includes tapes or ribbons which may or may not be compressed, crimped or otherwise treated. It should also be understood that not every fibre in the gauze is required to be the Pd/Co alloy. There may be present different Co levels in the fibres comprised in the gauze in amounts as disclosed in claim 1, and additionally there may be other palladium alloys or palladium itself, forming fibres.

Preferably, palladium forms 80% by weight or more, ofthe alloy. The balance ofthe alloy may be cobalt, with minor amounts of other alloying elements or components, or other alloying elements or compounds may be present in significant amounts, providing that cobalt is also present in the prescribed amounts of at least 0.1% to 5% (weight). Suitable additional alloying elements are nickel, gold, copper and silver. The alloy may contain non-metallic components, eg oxides, such as cobalt oxide.

The palladium-cobalt alloys are themselves known, and may be prepared by methods known in the art. We believe that they offer mechanical advantages in the process of drawing wires, and in weaving or knitting, or other gauze formation methods.

The catchment gauzes according to the invention include all high surface area, relatively low pressure drop constructions of woven, knitted, bonded or any other construction. The benefits of the invention are not limited to a particular gauze construction, but it is preferred at this time to operate with a woven or knitted gauze. It is to be understood that a gauze according to the invention may be one of several gauzes used as a catchment pack, and the other gauzes may be of other palladium-cobalt alloys, other palladium alloys or palladium, or may be of ceramics or composite materials. It is conventional to use heat-resistant stainless steel separators to support the catchment gauzes and also to separate the catchment gauzes from the catalyst gauzes.

The perceived advantages ofthe novel catchment gauzes of the invention arise from the material, although it will be realised by the skilled man that differences in wire thickness, gauze weight, pressure drop, closeness of weave or knit and numbers of wires, numbers of gauzes in a catchment pack, construction of gauzes in a catchment pack (eg heavier weight gauze(s) at the front of the pack and lighter weight gauze(s) at the rear of the pack), all play a significant part in the total actual amount of platinum recovered and in the time taken to recover a given weight ofplatinum. As always, the economics of the recovery process, that is the investment in catchment gauzes, the prevailing prices for platinum and palladium and refining costs, will play a major part in the design of a catchment pack for a given ammonia oxidation plant.

Although we do not wish to be bound by any theory, our present belief is that the palladium-cobalt alloy plays a part in one or more of the following processes. During the ammonia oxidation campaign, which may be from 50 to 250 days, for example, the cobalt diffuses to the surface of the fibre and is oxidised to cobalt oxide, which in turn volatilizes. We believe that there is an increase in surface area ofthe catchment gauze, in addition to the well-known increase caused by growths of metal on gauze elements during the campaign. This acts to increase the collection efficiency of the gauze. It is also possible to volatilize all, or substantially all, of the cobalt so that at the end of the campaign, there is essentially no cobalt left in the catchment gauze, and therefore refining ofthe catchment gauze is simplified by there being little or no base metal to be removed. Alternatively, it may be desirable to maintain a level of cobalt within the fibre, or more especially, a level of cobalt or cobalt oxide on or near the surface thereof, with the aim of reducing N₂O production throughout the campaign. It is believed that the cobalt, possibly as cobalt metal, or as cobalt oxide, has a part to play in the catalytic processes also. This runs counter to traditional thinking on the function of catchment gauzes as being designed exclusively to maximise collection efficiency for platinum under the operating conditions, with the catalyst gauze(s) being designed to carry out all the catalytic action in the process.

It is known that during start-up, at the beginning of an ammonia oxidation campaign, the catalytic process does not operate at maximum efficiency, but climbs over a period. This is at least partly connected with the catalyst reaching a "light-off" temperature, a well-known phenomenon in catalytic processes, and partly with the development of the catalyst surface. During this initial period, therefore, a proportion of ammonia passes through the reactor without being converted. Also, at catalyst temperatures lower than optimum, N₂O is formed preferentially. It is believed at present that cobalt, or cobalt oxide formed in situ in the catchment gauze, acts to promote oxidation of ammonia that has slipped past the catalyst gauze to NO, and also acts to convert N₂O to NO. The latter reaction may take place substantially throughout the campaign.

The present invention is illustrated but not limited by the following example.

### EXAMPLE

An alloy of 95% Pd 5% Co was prepared and drawn down using conventional technology, to wire of 0.076mm diameter. Using the knitting process described in EP 0364153, with a single feed circular knitting machine of 6 inch (15.24cm) diameter, a knitted catchment fabric was produced.

Initial tests showed good recovery of platinum and a significant reduction in N₂O emissions.

A woven catchment gauze containing 1200ppm Co in Pd was prepared using conventional technology, and is suitable for use in a low pressure reactor. A significant reduction in N₂O emissions was observed.

## Claims

1. A method of attenuating N₂O emissions during start-up of an ammonia oxidation reaction utilising a platinum based catalyst gauze incorporating a platinum recovery gauze comprising fibres of a palladium alloy, characterised in that said palladium alloy contains 0.1 to 5wt% of cobalt.

2. A method according to claim 1, wherein the recovery gauze is knitted from wires of said alloy.

3. A method according to claim 1 or 2, wherein said palladium alloy additionally contains one or more of nickel, gold, copper and silver.

4. A method according to claim 1 or 2, wherein said palladium alloy comprises cobalt oxide.

## Patentansprüche

1. Verfahren zur Abschwächung der N₂O-Emissionen während der Inbetriebnahmephase einer Ammoniakoxidationsreaktion unter Verwendung eines Katalysatometzes auf Platinbasis und unter Einbeziehung eines Platinauffangnetzes, das Fasem einer Palladiumlegierung umfaßt, dadurch gekennzeichnet, daß die Palladiumlegierung 0,1-5 Gew.-% Cobalt enthält.

2. Verfahren nach Anspruch 1, wobei das Gewinnungsnetz aus Drähten dieser Legierung gestrickt ist.

3. Verfahren nach Anspruch 1 oder 2, wobei die Palladiumlegierung darüber hinaus ein oder mehrere Bestandteile aus Nickel, Gold, Kupfer und Silber enthält.

4. Verfahren nach Anspruch 1 oder 2, wobei die genannte Palladiumlegierung Cobaltoxid umfaßt.

## Revendications

1. Procédé pour réduire les émissions de N₂O pendant la phase initiale d'une réaction d'oxydation d'ammoniac utilisant comme catalyseur une toile métallique à base de platine à laquelle est incorporée une toile métallique de récupération du platine comprenant des fibres d'un alliage de palladium, caractérisé en ce que cet alliage de palladium contient 0,1 à 5% en poids de cobalt.

2. Procédé suivant la revendication 1, dans lequel la toile métallique de récupération est tricotée à partir de fils de l'alliage en question.

3. Procédé suivant la revendication 1 ou 2, dans lequel l'alliage de palladium contient en outre un ou plusieurs des éléments nickel, or, cuivre et argent.

4. Procédé suivant la revendication 1 ou 2, dans lequel l'alliage de palladium comprend de l'oxyde de cobalt.
